# EUROPÄISCHE PATENTSCHRIFT

(11) **EP 2 307 754 B1**
(45) Veröffentlichungstag und Bekanntmachung des Hinweises auf die Patenterteilung: **01.02.2012**
(21) Anmeldenummer: 09777443.4
(22) Anmeldetag: 27.07.2009
(51) Int. Cl.: F16D 65/56

(54) **NACHSTELLVORRICHTUNG FÜR EINE SCHEIBENBREMSE**
ADJUSTMENT DEVICE FOR A DISK BRAKE
DISPOSITIF D'AJUSTEMENT POUR FREIN À DISQUE

(30) Priorität: 30.07.2008 DE 102008035370
(43) Veröffentlichungstag der Anmeldung: 13.04.2011
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE); KEMPINGER, Georg, 85386 Eching (DE); ORGLER, Florian, 80335 München (DE)
(74) Vertreter: Mattusch, Gundula
(86) Internationale Anmeldenummer: PCT/EP2009/005408
(87) Internationale Veröffentlichungsnummer: WO 2010/012426

(56) Entgegenhaltungen:
- WO-A-97/01045
- DE-A1- 4 212 406
- DE-A1-102004 037 771

## Beschreibung

Die Erfindung betrifft eine Nachstellvorrichtung für eine Scheibenbremse, insbesondere pneumatisch betätigte Scheibenbremse.

Nachstellvorrichtungen für Scheibenbremsen gibt es in unterschiedlichen Ausführungen. Aus der DE 10 2004 037 771 A1 Oberbegriff des Anspruchs 1, 2 oder 4 ist eine Nachstellvorrichtung für eine Scheibenbremse bekannt. Sie ist für eine pneumatisch betätigte Scheibenbremse, insbesondere in Schiebesattelausführung, geeignet. Weiterhin ist sie aber auch in pneumatisch betätigten Fest- oder Schwenksattelscheibenbremsen verwendbar.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1. Die Kolbenhübe der Bremszylinder bewegen sich zwischen 50 und 75 mm, damit ergeben sich Zuspannwege zum Andrücken der Bremsbeläge an die Bremsscheibe von etwa 4 mm.

Die Reibmaterialdicke der Bremsbeläge liegt im Bereich von 20 mm, da 2 Beläge eingebaut sind ergibt sich somit, ohne Berücksichtigung des Scheibenverschleißes, ein Verschleißweg von etwa 40 mm. Dieser Weg ist um ein Vielfaches größer als der o. e. Zuspannweg. Es besteht daher die Notwendigkeit die Bremse mittels einer Vorrichtung, dem Belagverschleiß entsprechend, nachzustellen. Stand der Technik ist eine automatisch arbeitende Verschleißnachstellung, damit wird erreicht, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (zum Beispiel Schaltfinger oder Zahnrad) vom Bremshebel angetrieben wird. Bei einem Bremsvorgang führt der mit der Kolbenstange des Bremszylinders gekoppelte Bremshebel eine Drehbewegung aus. Bevor über den Koppelmechanismus der Nachstellung (zum Beispiel Schaltgabel und Schaltfinger oder Zahnrad) die Drehbewegung des Hebels in den Nachsteller eingeleitet wird, muss ein so genannter Leerweg überwunden werden. Dieser Weg ist für die Größe des so genannten Lüftspiels ausschlaggebend, da während dieser Bewegung die Nachstellung nicht aktiviert wird, und der Zuspannweg damit das Lüftspiel darstellt. Nach Überwinden dieses Leerwegs wird der Nachsteller in eine Drehbewegung versetzt, und durch die Koppelung mit dem Gewindestempel bzw. -rohr wird ein Nachstellvorgang eingeleitet.

Die DE 10 2004 037 711 A1 beschreibt einen solchen Nachsteller, der in Fig. 12 gezeigt ist. Er besteht im Wesentlichen aus folgenden Funktionselementen:
- Welle 2
- Lagerscheibe 3
- Axiallager 5
- Bundbuchse, bzw. Distanzhülse 19
- Schaltgabel, bzw. Antriebsring 6
- Kugelrampenkupplung 7
- Konuskupplung 17
- Zylinderfeder 12
Hinsichtlich der Beschreibung wird auf die DE 10 2004 037 711 A1 verwiesen.

Die Nachstellvorrichtung muss im Wesentlichen zwei Funktionen erfüllen:
1. die automatische Lüftspieleinstellung
2. die manuelle Rückstellung der Nachstellmechanik beim Erneuern der Bremsbeläge.

Beim Einbau neuer Bremsbeläge müssen Druckstücke, welche die Beläge an die Bremsscheibe drücken, zurückgestellt werden. Dies erfolgt durch das Zurückdrehen von Gewindestempeln (Gewinderohre bzw. Stellspindeln), welche während des Bremseneinsatzes durch die automatisch arbeitende Nachstellvorrichtung, dem Belagverschleiß entsprechend, herausgedreht wurden.

Beim Zurückdrehen der Stellspindeln ist darauf zu achten, dass diese nicht mit zu hoher Kraft gegen eine Begrenzung gedreht werden. Würde dies erfolgen, besteht die Gefahr, dass die Nachstellung nach dem Erneuern der Bremsbeläge nicht arbeiten kann, da die Verklemmkraft der Stellspindeln mit der Begrenzung größer ist als das vom Nachsteller erzeugte Verstellmoment.

Wie vorher geschildert, werden beim Einbau neuer Beläge die Stellspindeln durch manuelles Drehen am Nachsteller zurückgestellt. Da eine visuelle Kontrolle bzgl. der Endposition der Stellspindeln nicht möglich ist, ist eine mechanische, deutlich fühlbare Rückdrehbegrenzung erforderlich.

Die Aufgabe der vorliegenden Erfindung besteht darin, eine Nachstellvorrichtung mit einer verbesserten Sperreinrichtung als Rückdrehbegrenzung bereitzustellen.

Die Aufgabe wird durch eine Nachstellvorrichtung mit den Merkmalen des Anspruchs 1, 2 oder 4 gelöst.
Die Aufgabe wird auch durch eine Scheibenbremse mit den Merkmalen des Anspruchs 5 gelöst.

Zwischen der Nachstellvorrichtung, die in die Stellspindel einsetzbar ist, und der Stellspindel ist eine Sperreinrichtung angeordnet, welche einen Anschlag in tangentialer Richtung relativ zur Drehrichtung für die Stellspindel bildet. Damit wird vorteilhaft erreicht, dass beim Rückstellen der Stellspindel durch die Nachstellvorrichtung die Stellspindel durch die Sperreinrichtung an einer Verklemmung gehindert wird, da der Anschlag in tangentialer Richtung die Drehbewegung unterbricht.

Eine vorteilhafte Ausbildung ist in Unteranspruch 3 angegeben.

Da das Zurückdrehen der Stellspindel durch die Nachstellvorrichtung erfolgt und sich der Nachsteller bzw. die Nachstellvorrichtung im direkten Eingriff mit der Stellspindel befindet, wird die Rückdrehbegrenzung über den Nachsteller zu ermöglicht, so dass keine aufwändigen Änderungen notwendig sind.

Wenn die Stellspindel die Belageinbauposition erreicht hat, ist der Nachsteller maximal in die Stellspindel eingetaucht. Die Stellspindel führt relativ zum Kupplungsring des Nachstellers eine Drehbewegung aus. Zwischen der Stirnseite der Stellspindel und des Nachstellers ist ein verform- oder verschiebbares, profiliertes Sperrelement angeordnet. Der Kupplungsring des Nachstellers besitzt vorzugsweise eine korrespondierende, beispielsweise sägezahnähnliche, zum Sperrelement passende Stirnverzahnung.

Wird nun die Stellspindel zurückgedreht, kommt es am Ende des Verstellweges zum Kontakt mit dem Sperrelement. Das Sperrelement wird durch die Stirnseite der Stellspindel axial solange verformt bzw. verschoben bis es zum Eingriff des Profils in der Verzahnung des Kupplungsrings kommt. Da der Kupplungsring über eine Bundbuchse und eine Lagerscheibe des Nachstellers an der Scheibenbremse, zum Beispiel an dessen Bremssattel, fixiert ist, kann die Stellspindel nicht mehr weiter zurückgedreht werden. Dadurch ist ein in Umfangsrichtung wirksamer Rückdrehanschlag realisiert. Eine Verklemmung der Stellspindel kann damit vermieden werden. Beim Betätigen der Bremse kann die Stellspindel vom Nachsteller ohne Überwindung einer hohen Reibkraft bzw. Klemmkraft vom Anschlag weggedreht werden.

Eine alternative Ausführung sieht eine Stirnverzahnung an der Stellspindel vor. Hierbei greift die Stellspindel mit der stirnseitigen Verzahnung bei Erreichen der Belageinbauposition direkt in die stirnseitige Verzahnung des Kupplungsrings am Nachsteller ein. Dadurch kann die Stellspindel nicht mehr weiter zurückgedreht werden. Da auch bei dieser Lösung der Anschlag in tangentialer Richtung wirksam ist, kommt es zu keiner Verklemmung. Somit ist es mit geringem Kraftaufwand möglich, die Stellspindel vom Anschlag wegzudrehen. Die Funktion der automatischen Nachstellung ist damit ohne Einschränkung gewährleistet.

Eine axiale Verschiebbarkeit des Sperrelementes ist zum Beispiel durch zumindest eine Nase möglich, die mit einer Ausnehmung der Federhülse in Eingriff steht.
Das Sperrelement kann federnde Haken aufweist, welche zum Eingriff mit korrespondierenden Ausnehmungen des Kupplungsrings vorgesehen sind.

Eine Scheibenbremse, insbesondere pneumatisch betätigte Scheibenbremse, weist die oben beschriebene Nachstellvorrichtung auf.

Die Erfindung wird nun anhand einer beispielhaften Ausführung mit Bezug auf die beigefügten Zeichnungen näher erläutert. Hierbei zeigen:
- Fig. 1: eine Teilschnittdarstellung eines Bremssattels einer Scheibenbremse mit einer Stellspindel und einer erfindungsgemäßen Nachstellvorrichtung;
- Fig. 2: eine Teilschnittdarstellung einer ersten beispielhaften Ausführung einer erfindungsgemäßen Nachstellvorrichtung;
- Fig. 3: eine perspektivische Ansicht eines ersten Ausführungsbeispiels eines Sperrelements;
- Fig. 4: eine Teilschnittdarstellung einer zweiten beispielhaften Ausführung einer erfindungsgemäßen Nachstellvorrichtung mit einem zweiten Ausführungsbeispiel des Sperrelements;
- Fig. 5: eine perspektivische Ansicht des zweiten Ausführungsbeispiels des Sperrelements;
- Fig. 6: eine Teilschnittdarstellung einer dritten beispielhaften Ausführung einer erfindungsgemäßen Nachstellvorrichtung mit einem dritten Ausführungsbeispiel des Sperrelements;
- Fig. 7: eine perspektivische Ansicht des dritten Ausführungsbeispiels des Sperrelements;
- Fig. 8: eine Teilschnittdarstellung einer vierten beispielhaften Ausführung einer erfindungsgemäßen Nachstellvorrichtung mit einem vierten Ausführungsbeispiel des Sperrelements;
- Fig. 9: eine perspektivische Ansicht des vierten Ausführungsbeispiels des Sperrelements;
- Fig. 10: eine Teilansicht einer fünften beispielhaften Ausführung einer erfmdungsgemäßen Nachstellvorrichtung;
- Fig. 11: eine perspektivische Ansicht einer Stellspindel mit einer Verzahnung;
- Fig. 12: eine Teilschnittdarstellung einer Nachstellvorrichtung nach dem Stand der Technik; und
- Fig. 13: eine schematische Darstellung einer Scheibenbremse.

Elemente mit gleichen oder ähnlichen Funktionen sind in den Figuren mit gleichen Bezugszeichen versehen.

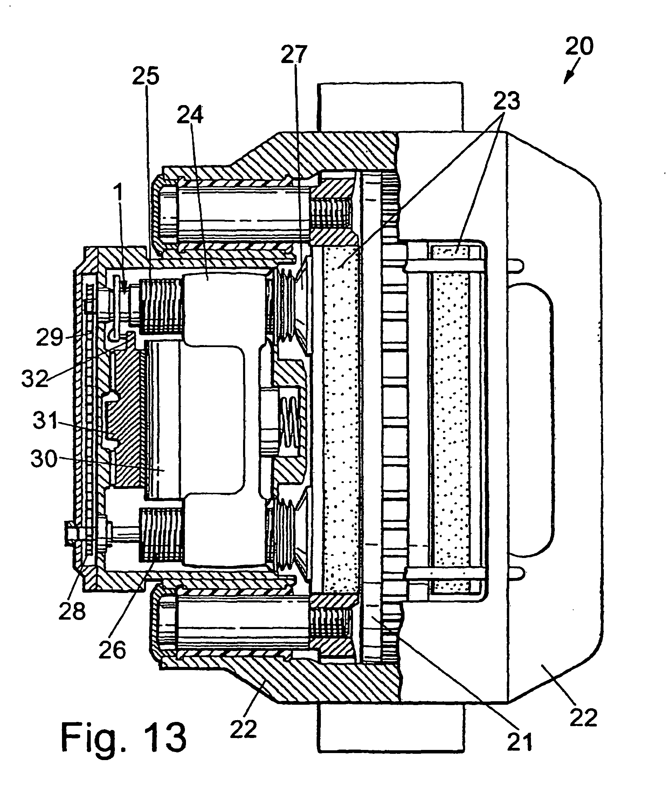

Zu Aufbau und Funktion einer pneumatischen Scheibenbremse nach Fig. 13 wird auf die entsprechende Beschreibung der DE 197 29 024 C1 verwiesen. In der Fig. 13 sind die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 ist auch für elektromotorisch betätigte Scheibenbremsen geeignet.

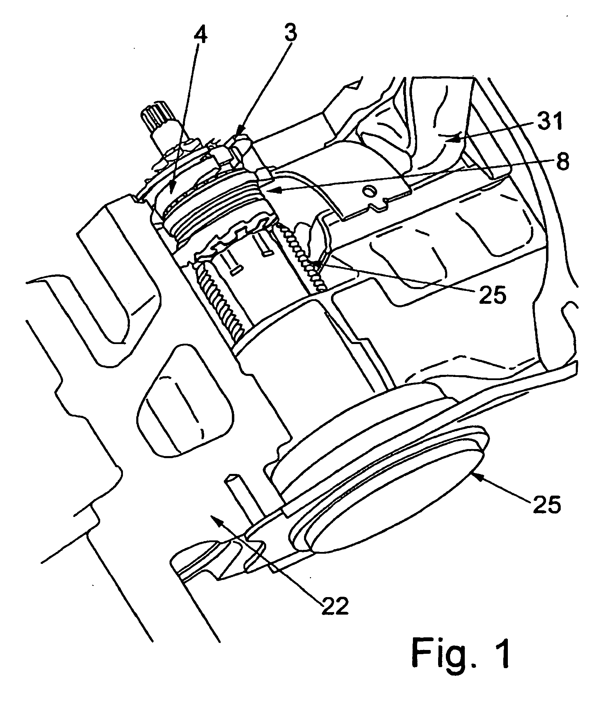

Fig. 1 zeigt eine Teilschnittdarstellung eines Bremssattels 22 einer Scheibenbremse 20 mit einer Stellspindel 25 und einer erfindungsgemäßen Nachstellvorrichtung 1, die in der Stellspindel 25 eingebracht ist. Die Stellspindel 25 ist unten mit einem Druckstück 27 versehen (siehe auch Fig. 13), wobei sie hier in einer Anfangsstellung zum Einbau bzw. Wechsel eines Belags gezeigt ist.

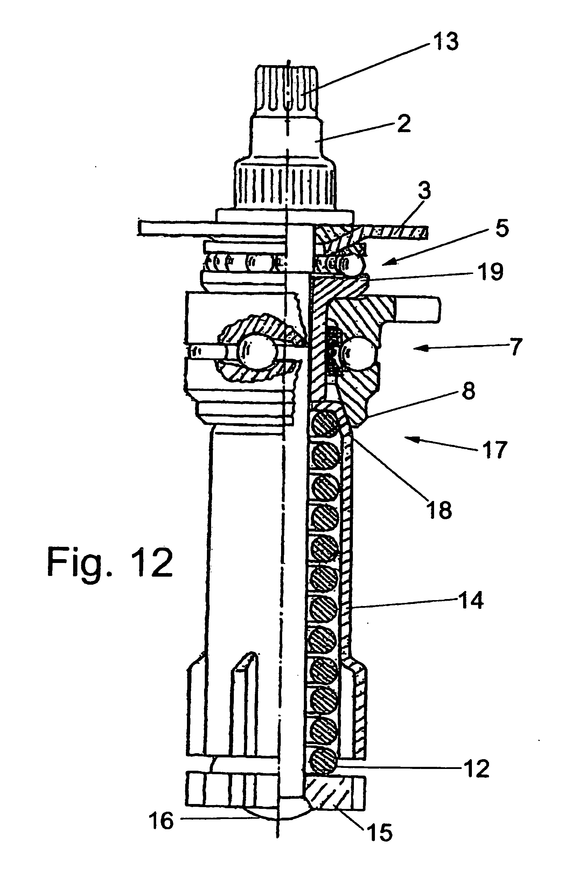

Die Nachstellvorrichtung 1 weist folgende Bauteile auf, die hier nicht alle gezeigt sind: eine Spindel, mit einem Antriebszapfen an ihrem oberen Ende; eine Lagerscheibe 3 zur Befestigung der Nachstellvorrichtung 1 im Bremssattel 22; eine Bundbuchse 4, die verdrehsicher mit der Lagerscheibe 3 gekoppelt ist und einen oberen Bund mit einer darunter angeordneten Lauffläche für Kugeln eines Axiallagers aufweist; einen Antriebsring, der mit einer Schaltgabel verbunden ist, die mit einem Drehhebel 31 gekoppelt ist; eine Kugelrampenkupplung mit einem Kupplungsring 8, welcher mit einer Federhülse 14 zusammenwirkt; und eine Zylinderfeder, die in der Federhülse 14 angeordnet ist und sich auf einer Profilscheibe abstützt. Die allgemeine Funktion der Nachstellvorrichtung 1 wird in DE 10 2004 037 771 A1 mit Bezug auf Fig. 12 ausführlich beschrieben, worauf hier verwiesen wird.

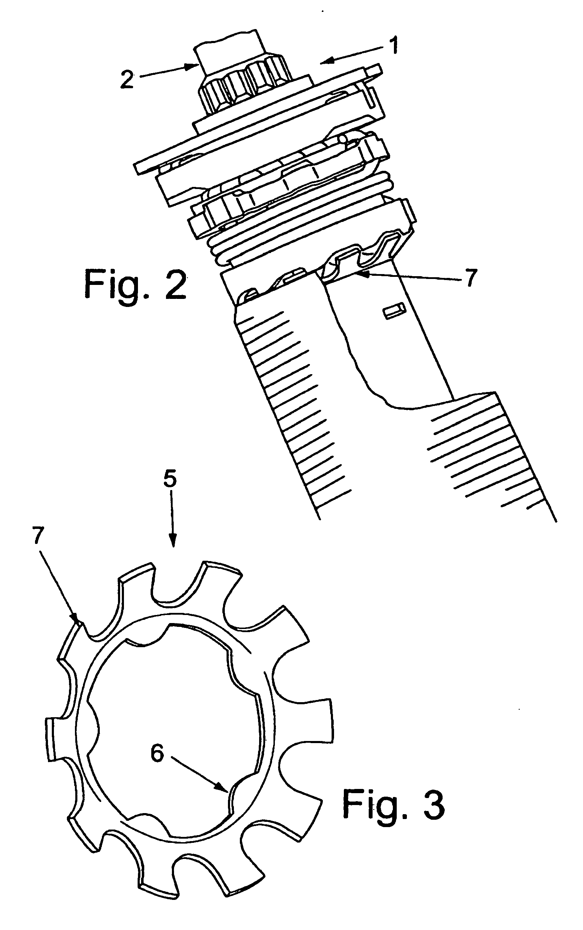

Es wird nun Bezug auf die Fig. 2, 4, 6, und 8 genommen.
zeigen eine erste, zweite, dritte und vierte beispielhafte Ausführung in Teilschnittdarstellung einer erfindungsgemäßen Nachstellvorrichtung 1 mit einem ersten, zweiten, dritten und vierten Ausführungsbeispiel eines erfindungsgemäßen Sperrelements 5.

Zwischen der Unterseite des Kupplungsrings 8 und der Oberseite der Stellspindel 25 ist eine Sperreinrichtung angeordnet. In diesen vorliegenden Beispielen weist die Sperreinrichtung jeweils ein verform- oder verschiebbares, profiliertes Sperrelement 5 auf. Der Kupplungsring 8 des Nachstellers 1 besitzt vorzugsweise eine sägezahnähnliche, zum Sperrelement passende Stirnverzahnung. Wird nun die Stellspindel 25 zurückgedreht, kommt es am Ende des Verstellweges zum Kontakt mit dem Sperrelement 5. Das Sperrelement 5 wird durch die Stirnseite der Stellspindel 25 axial solange verformt bzw. verschoben, bis es zum Eingriff des Profils in der Verzahnung des Kupplungsrings 8 kommt. Da der Kupplungsring 8 über die Bundbuchse und der Lagerscheibe 3 des Nachstellers 1 fixiert ist, kann die Stellspindel 25 nicht mehr weiter zurückgedreht werden. Dadurch ist ein in Umfangsrichtung wirksamer Rückdrehanschlag realisiert. Eine Verklemmung der Stellspindel 25 kann damit vermieden werden. Beim Betätigen der Bremse kann die Stellspindel 25 vom Nachsteller 1 ohne Überwindung einer hohen Reibkraft bzw. Klemmkraft vom Anschlag weggedreht werden.

Die jeweiligen Sperrelemente 5 sind in den Figuren 3, 5, 7 und 9 als ein erstes, zweites, drittes und viertes Ausführungsbeispiel dargestellt.

Die verschiedenen Sperrelemente 5 weisen jeweils innenliegende Nasen 6 zur drehfesten Verbindung mit in Axialrichtung verlaufenden Ausnehmungen 33 der Federhülse 14 auf. Dadurch sind die Sperrelemente 5 jeweils axial auf der Federhülse 14 verschiebbar.

Das Sperrelement nach dem ersten Ausführungsbeispiel nach Fig. 3 weist an dem Außenumfang federnde Haken 7 zum Eingriff mit korrespondierenden Ausnehmungen des Kupplungsring 8 auf.

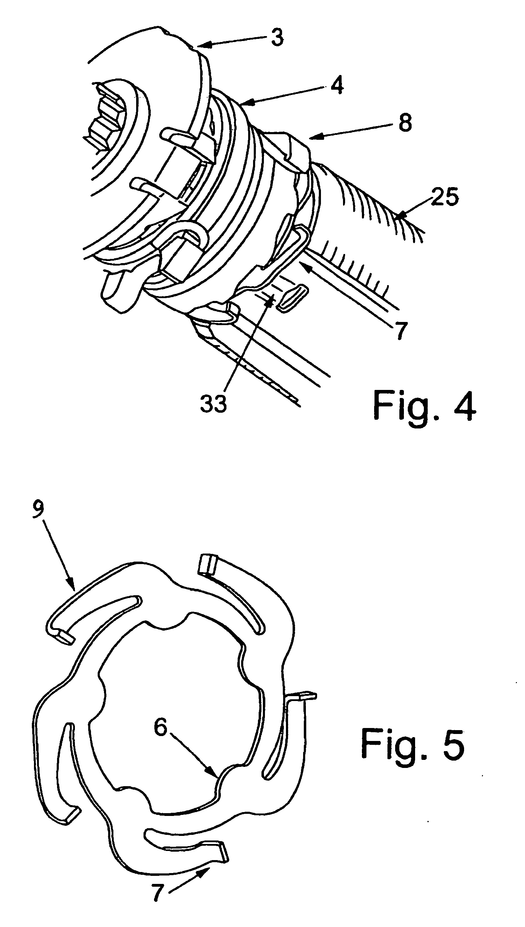

Eine Alternative zeigt Fig. 5 in einer zweiten Ausführung des Sperrelementes 5, wobei die Haken 7 jeweils an Federlaschen 9 angebracht sind.

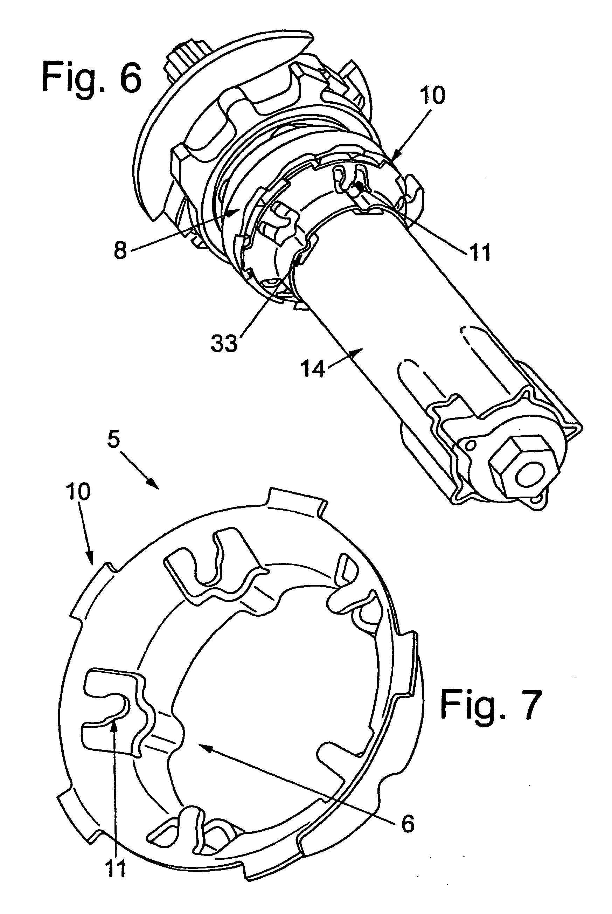

Eine weitere Alternative ist in Fig. 7 in einer dritten Ausführung des Sperrelementes 5 dargestellt. Hier sind Zähne eines Zahnprofils 10 an dem Außenumfang und innenliegende Rückstellfederelemente 11 zur Zusammenwirkung mit der Stellspindel 25 auf.

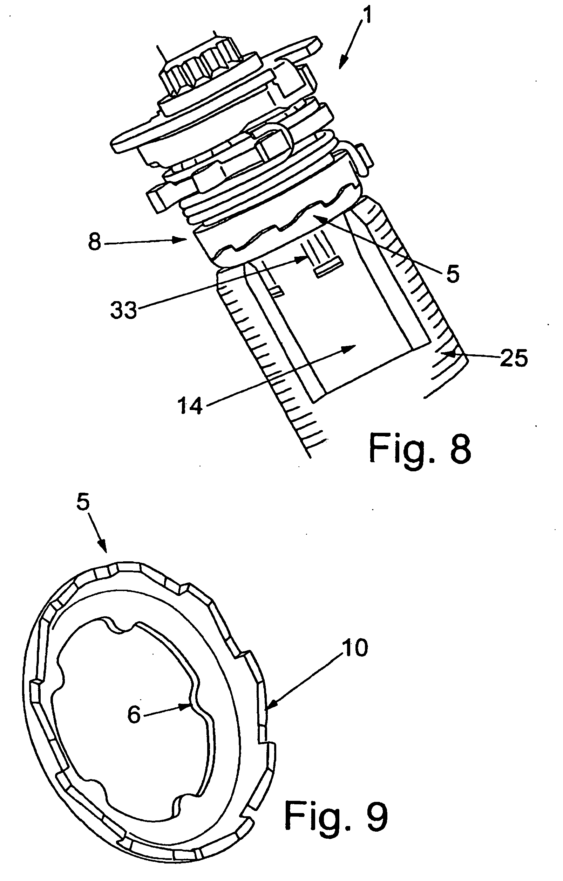

Eine noch weitere Alternative zeigt Fig. 9 in einer vierten Ausführung des Sperrelementes 5. Zähne des Zahnprofils 10 sind hierbei auf dem Außenumfang angeordnet. Dieses Sperrelement 5 ist zum Beispiel ein starrer Ring.

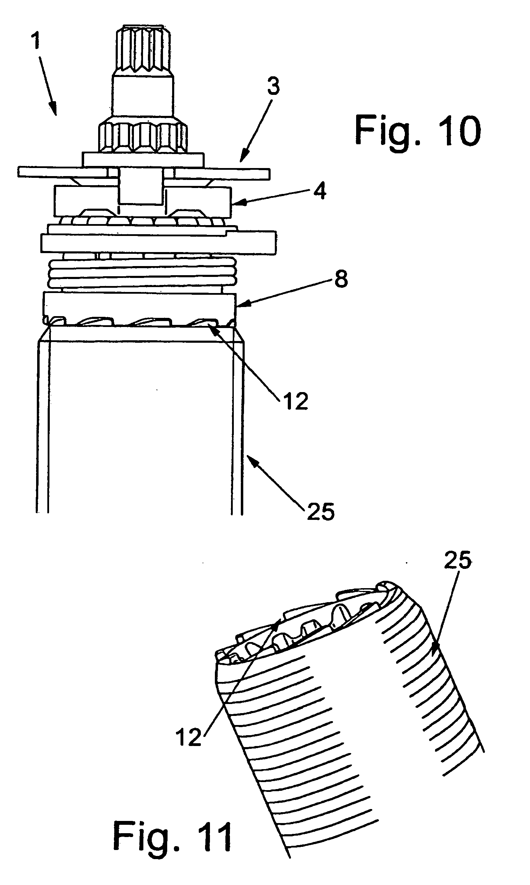

Eine weitere Lösungsmöglichkeit ist das Anbringen einer Stirnverzahnung an der Stellspindel 25 und als fünftes Ausführungsbeispiel in Fig. 10 und 11 gezeigt. Bei dieser Lösung greift die Stellspindel 25 mit einer an ihr angeformten stirnseitigen Verzahnung 12 bei Erreichen der Belageinbauposition direkt in eine korrespondierende stirnseitige Verzahnung des Kupplungsrings 8 am Nachsteller 1 ein. Dadurch kann die Stellspindel nicht mehr weiter zurückgedreht werden. Da auch bei dieser Lösung der Anschlag in tangentialer Richtung wirksam ist, kommt es nicht zu einer Verklemmung, somit ist es möglich, die Stellspindel 25 mit geringem Kraftaufwand vom Anschlag wegzudrehen. Die Funktion der automatischen Nachstellung ist damit ohne Einschränkung gewährleistet.

Die Erfindung ist nicht auf die oben beschriebenen Ausführungsbeispiele beschränkt. Sie ist im Rahmen der beigefügten Ansprüche modifizierbar.

### Bezugszeichenliste

- 1: Nachstellvorrichtung
- 2: Welle
- 3: Lagerscheibe
- 4: Bundbuchse
- 5: Sperrelement
- 6: Nase
- 7: Haken
- 8: Kupplungsring
- 9: Federlasche
- 10: Zahnprofil
- 11: Rückstellfederelement
- 12: Verzahnung
- 13: Antriebszapfen
- 14: Federhülse
- 15: Profilscheibe
- 16: Einstellelement
- 17: Konuskupplung
- 18: Hülsenkonus
- 19: Distanzhülse
- 20: Scheibenbremse
- 21: Bremsscheibe
- 22: Bremssattel
- 23: Bremsbeläge
- 24: Traverse
- 25: Erste Stellspindel
- 26: Zweite Stellspindel
- 27: Druckstück
- 28: Kettenräder
- 29: Kette
- 30: Exzenter
- 31: Drehhebel
- 32: Antriebselement
- 33: Ausnehmung

## Patentansprüche

1. Nachstellvorrichtung (1) zur Nachstellung eines Verschleißes von Bremsbelägen (23) einer pneumatisch betätigten Scheibenbremse (20) mit Bremsscheibe (21) und einer drehhebelbetätigten Zuspannvorrichtung, die in eine Stellspindel (25) der Scheibenbremse (20) einsetzbar ist, mit Stellspindel (25), wobei die Nachstellvorrichtung (1) einen Kupplungsring (8) zur Kopplung mit einer Federhülse (14), die mit der Stellspindel (25) in Eingriff steht, aufweist, wobei zwischen der Stellspindel (25) und der Nachstellvorrichtung (1) eine Sperreinrichtung angeordnet ist, welche einen Anschlag in tangentialer Richtung relativ zur Drehrichtung für die Stellspindel (25) bildet, **dadurch gekennzeichnet, dass** die Sperreinrichtung zwischen dem Kupplungsring (8) und der Stellspindel (25) angeordnet ist und ein Sperrelement (5) aufweist, welches drehfest und axial verschiebbar oder drehfest und axial verformbar an der Federhülse (14) angebracht ist und federnde Haken (7) aufweist, die zum Eingriff mit korrespondierenden Ausnehmungen des Kupplungsrings (8) vorgesehen sind.

2. Nachstellvorrichtung (1) zur Nachstellung eines Verschleißes von Bremsbelägen (23) einer pneumatisch betätigten Scheibenbremse (20) mit Bremsscheibe (21) und einer drehhebelbetätigten Zuspannvorrichtung, die in eine Stellspindel (25) der Scheibenbremse (20) einsetzbar ist, mit Stellspindel (25), wobei die Nachstellvorrichtung (1) einen Kupplungsring (8) zur Kopplung mit einer Federhülse (14), die mit der Stellspindel (25) in Eingriff steht, aufweist, wobei zwischen der Stellspindel (25) und der Nachstellvorrichtung (1) eine Sperreinrichtung angeordnet ist, welche einen Anschlag in tangentialer Richtung relativ zur Drehrichtung für die Stellspindel (25) bildet, **dadurch gekennzeichnet, dass** die Sperreinrichtung zwischen dem Kupplungsring (8) und der Stellspindel (25) angeordnet ist und ein Sperrelement (5) aufweist, welches drechfest und axial verschiebbar oder drehfest und axial verformbar an der Federhülse (14) angebracht ist und ein Zahnprofil einer Stimverzahnung (10) mit zumindest einem Zahn zum Eingriff mit korrespondierenden Ausnehmungen einer Stirnverzahnung des Kupplungsrings (8) und insbesondere zumindest ein Rückstellfederelement (11) aufweist.

3. Nachstellvorrichtung (1) nach Anspruch 1 oder 2, **dadurch gekennzeichnet, dass** das Sperrelement (5) zur drehfesten Kopplung mit der Federhülse (14) zumindest eine Nase (6) aufweist, die zum Eingriff mit einer Ausnehmung (33) der Federhülse (14) vorgesehen ist.

4. Nachstellvorrichtung (1) zur Nachstellung eines Verschleißes von Bremsbelägen (23) einer pneumatisch betätigten Scheibenbremse (20) mit Bremsscheibe (21) und einer drehhebelbetätigten Zuspannvorrichtung, die in eine Stellspindel (25) der Scheibenbremse (20) einsetzbar ist, mit Stellspindel (25), wobei die Nachstellvorrichtung (1) einen Kupplungsring (8) zur Kopplung mit einer Federhülse (14), die mit der Stellspindel (25) in Eingriff steht, aufweist, wobei zwischen der Stellspindel (25) und der Nachstellvorrichtung (1) eine Sperreinrichtung angeordnet ist, welche einen Anschlag in tangentialer Richtung relativ zur Drehrichtung für die Stellspindel (25) bildet, **dadurch gekennzeichnet, dass** die Sperreinrichtung zwischen dem Kupplungsring (8) und der Stellspindel (25) angeordnet ist und eine Stirnverzahnung (12) aufweist, welche an dem Ende der Stellspindel (25) angeformt ist, die dem Kupplungsring (8) zugewandt ist, und zum Eingriff mit einer am Kupplungsring (8) angeformten, korrespondierenden Stimverzahnung vorgesehen ist.

5. Scheibenbremse (20), insbesondere pneumatisch betätigte Scheibenbremse, mit einer Nachstellvorrichtung (1) nach einem der vorhergehenden Ansprüche.

## Claims

1. Adjusting device (1) for adjusting for wear of brake linings (23) of a pneumatically actuated disc brake (20) with brake disc (21) and a rotary-lever-actuated application device, which adjusting device can be inserted into a control spindle (25) of the disc brake, with control spindle (25), with the adjusting device (1) having a clutch ring (8) for coupling to a spring sleeve (14) which is in engagement with the control spindle (25), wherein a blocking device is arranged between the control spindle (25) and the adjusting device (1), which blocking device forms a stop in the tangential direction relative to the direction of rotation for the control spindle (25), **characterised in that** the blocking device is arranged between the clutch ring (8) and the control spindle (25) and has a blocking element (5) which is attached in a rotationally fixed and axially displaceable or rotationally fixed and axially deformable manner to the spring sleeve (14) and has resilient hooks (7) which are provided to engage with corresponding recesses of the clutch ring (8).

2. Adjusting device (1) for adjusting for wear of brake linings (23) of a pneumatically actuated disc brake (20) with brake disc (21) and a rotary-lever-actuated application device, which adjusting device can be inserted into a control spindle (25) of the disc brake (20), with control spindle (25), with the adjusting device (1) having a clutch ring (8) for coupling to a spring sleeve (14) which is in engagement with the control spindle (25), wherein a blocking device is arranged between the control spindle (25) and the adjusting device (1), which blocking device forms a stop in the tangential direction relative to the direction of rotation for the control spindle (25), **characterised in that** the blocking device is arranged between the clutch ring (8) and the control spindle (25) and has a blocking element (5) which is attached in a rotationally fixed and axially displaceable or rotationally fixed and axially deformable manner to the spring sleeve (14) and has a toothed profile of an end toothing (10) with at least one tooth for engagement with corresponding recesses of an end toothing of the clutch ring (8) and in particular has at least one restoring spring element (11).

3. Adjusting device (1) according to claim 1 or 2, **characterised in that** the blocking element (5) has at least one lug (6) for rotationally fixed coupling to the spring sleeve (14), which lug is provided to engage with a recess (33) of the spring sleeve (14).

4. Adjusting device (1) for adjusting for wear of brake linings (23) of a pneumatically actuated disc brake (20) with brake disc (21) and a rotary-lever-actuated application device, which adjusting device can be inserted into a control spindle (25) of the disc brake (20), with control spindle (25), with the adjusting device (1) having a clutch ring (8) for coupling to a spring sleeve (14) which is in engagement with the control spindle (25), wherein a blocking device is arranged between the control spindle (25) and the adjusting device (1), which blocking device forms a stop in the tangential direction relative to the direction of rotation for the control spindle (25), **characterised in that** the blocking device is arranged between the clutch ring (8) and the control spindle (25) and has an end toothing which is formed at the end of the control spindle (25) which faces the coupling ring (8) and is provided to engage with a corresponding end toothing formed on the coupling ring (8).

5. Disc brake (20), in particular a pneumatically actuated disc brake, with an adjusting device (1) according to one of the preceding claims.

## Revendications

1. Dispositif (1) de rattrapage, pour le rattrapage d'une usure de garnitures (23) d'un frein (20) à disque à actionnement pneumatique, comprenant un disque (21) de frein et un dispositif de serrage actionné par levier tournant et pouvant être utilisé dans une broche (25) de réglage du frein (20) à disque, comprenant une broche (25) de réglage, dans lequel le dispositif (1) de rattrapage comporte un anneau (8) de couplage pour l'accouplement à une douille (14) à ressort, qui entre en prise avec la broche (25) de réglage, dans lequel entre la broche (25) de réglage et le dispositif (1) de rattrapage est monté un dispositif de blocage, qui forme une butée dans la direction tangentielle par rapport au sens de rotation pour la broche (25) de réglage, **caractérisé en ce que** le dispositif de blocage est disposé entre l'anneau (8) de couplage et la broche (25) de réglage et comporte un élément (5) de blocage, qui est mis sur la douille (14) à ressort en étant solidaire en rotation et coulissant axialement ou solidaire en rotation et déformable axialement et comporte des crochets (7) élastiques qui sont prévus pour pénétrer dans des évidements correspondant de l'anneau (8) de couplage.

2. Dispositif (1) de rattrapage, pour le rattrapage d'une usure de garnitures (23) d'un frein (20) à disque à actionnement pneumatique, comprenant un disque (21) de frein et un dispositif de serrage actionné par levier tournant et pouvant être utilisé dans une broche (25) de réglage du frein (20) à disque, comprenant une broche (25) de réglage, dans lequel le dispositif (1) de rattrapage comporte un anneau (8) de couplage pour l'accouplement à une douille (14) à ressort, qui entre en prise avec la broche (25) de réglage, dans lequel entre la broche (25) de réglage et le dispositif (1) de rattrapage est monté un dispositif de blocage, qui forme une butée dans la direction tangentielle par rapport au sens de rotation pour la broche (25) de réglage, **caractérisé en ce que** le dispositif de blocage est disposé entre l'anneau (8) de couplage et la broche (25) de réglage et comporte un élément (5) de blocage, qui est mis sur la douille (14) à ressort en étant solidaire en rotation et coulissant axialement ou solidaire en rotation et déformable axialement et a un profil denté d'une denture (10) droite ayant au moins une dent d'engrenage avec des évidements correspondant d'une denture droite de l'anneau (8) de couplage et notamment au moins un élément (11) de ressort de rappel.

3. Dispositif (1) de rattrapage suivant la revendication 1 ou 2, **caractérisé en ce que** l'élément (5) de blocage comporte, pour le couplage solidaire en rotation avec la douille (14) à ressort, au moins un bec (6) qui est prévu pour pénétrer dans un évidement (33) de la douille (14) à ressort.

4. Dispositif (1) de rattrapage pour le rattrapage d'une usure de garnitures (23) d'un frein (20) à disque à actionnement pneumatique, comprenant un disque (21) de frein et un dispositif de serrage actionné par levier tournant et pouvant être utilisé dans une broche (25) de réglage du frein (20) à disque, comprenant une broche (25) de réglage, dans lequel le dispositif (1) de rattrapage comporte un anneau (8) de couplage, pour l'accouplement à une douille (14) à ressort, qui entre en prise avec la broche (25) de réglage, dans lequel entre la broche (25) de réglage et le dispositif (1) de rattrapage est monté un dispositif de blocage qui forme une butée dans la direction tangentielle par rapport au sens de rotation pour la broche (25) de réglage, **caractérisé en ce que** le dispositif de blocage est disposé entre l'anneau (8) de couplage et la broche (25) de réglage et comporte une denture (12) droite qui est formée à l'extrémité de la broche (25) de réglage tournée vers l'anneau (8) de couplage et qui est prévue pour pénétrer dans une denture droite correspondante formée sur l'anneau (8) de couplage.

5. Frein (20) à disque, notamment frein à disque à actionnement pneumatique, ayant un dispositif (1) de rattrapage suivant l'une des revendications précédentes.
